# EUROPEAN PATENT SPECIFICATION

(11) **EP 3 463 958 B1**
(45) Date of publication and mention of the grant of the patent: **07.04.2021**
(21) Application number: 17727364.6
(22) Date of filing: 30.05.2017
(51) Int. Cl.: B60K 1/02, B60K 7/00, B60K 17/04

(54) **DRIVETRAIN APPARATUS**
ANTRIEBSSTRANGVORRICHTUNG
APPAREIL DE TRANSMISSION

(30) Priority: 31.05.2016 GB 201609481
(43) Date of publication of application: 10.04.2019
(73) Proprietor: Arrival Limited, Banbury OX16 2SN (GB)
(72) Inventor: REID, Jason, Banbury Oxfordshire OX16 2SN (GB)
(74) Representative: Korenberg, Alexander Tal
(86) International application number: PCT/GB2017/051536
(87) International publication number: WO 2017/207977

(56) References cited:
- EP-A1- 2 952 374
- JP-A- 2007 022 163

## Description

### Technical Field

This specification relates to a drivetrain apparatus for use in electric vehicles.

### Background

In recent times, there has been significant interest in electric vehicles which are regarded as more environmentally friendly than conventional petrol/diesel vehicles. Such vehicles include both passenger vehicles for personal use and commercial vehicles. Such as buses and trucks. In electric vehicles, an electrical power source provides power to a drivetrain which drives the wheels of the vehicle. The drivetrain includes a motor and a gearbox.

JP 2007 022163 A discloses a loading structure of a running gear, in which left and right driving motors are connected to each other by a connecting member in a chevron shape where both of driving shafts are separated backward in the longitudinal direction of the vehicle at intervals, and connecting ends of the driving shafts with the drive shafts are arranged in the rear in the vehicle longitudinal direction from the other ends.

EP 2952374 A1 discloses an electric automobile drive unit, in which left and a right wheels are individually driven by a plurality of drive-motor units, which are mounted onto a vehicle body via a sub-frame, so that each power transmission member provided by a constant-velocity joint has a small operation angle made by its input shaft and output shaft.

### Summary

In an aspect, there is provided a drivetrain apparatus as defined in claim 1. In another aspect, there is provided a drivetrain apparatus as defined in claim 14. Optional features of aspects are set out in the dependent claims.

According to a first example, there is provided a drivetrain apparatus for an electric vehicle, the drivetrain apparatus comprising a first motor-gearbox unit and a second motor-gearbox unit, wherein each motor-gearbox unit comprises a gearbox, a motor mounted to the gearbox, and a coupling region configured to receive each of a plurality of different coupling apparatuses configured to couple the first motor-gearbox unit to the second motor-gearbox unit, wherein each coupling apparatus provides a different coupled orientation between the first and second motor-gearbox units.

The drivetrain apparatus may further comprise at least one of the plurality of different coupling apparatuses.

Each coupling apparatus may provide a particular predetermined orientation between the first and second motor-gearbox units.

The coupling region of each motor-gearbox unit may comprise a mounting structure for mounting each of the plurality of coupling apparatuses to the coupling region.

The mounting structure may be universal to the plurality of coupling apparatuses.

Each of the plurality of different coupling apparatuses may comprise a first coupling plate and a second coupling plate.

The first coupling plate may be configured to be mounted to the coupling region of the first motor-gearbox unit and the second coupling plate may be configured to be mounted to the coupling region of the second motor-gearbox unit.

The coupling region of each motor-gearbox unit may be positioned adjacent to the motor of the motor-gearbox unit.

The gearbox of each motor-gearbox unit may comprise a front side having an output portion, the output portion defining a drive axis, and a rear side opposite to the front side.

The coupling region of each motor-gearbox unit may be on the rear side of the gearbox of the motor-gearbox unit.

The motor of each motor-gearbox unit may be mounted to the rear side of the gearbox of the motor-gearbox unit.

The motor-gearbox units may be configured to be coupled to each other such that the drive axes of the gearboxes of the motor-gearbox units are aligned with each other.

In each coupling orientation, the first and second motor-gearbox units may be at a different angle to each other.

Each of the plurality of coupling orientations may be be transitioned to another coupling orientation by a rotation of one of the motor-gearbox units with respect to the other motor-gearbox unit.

The rotation to transition from one coupling orientation to another may be a rotation about the aligned drive axes of the gearboxes.

In a plane perpendicular to the aligned drive axes of the gearboxes, the aligned drive axes may define a first point, the centre of one of the motors may define a second point, and the centre of the other motor may define a third point, and the angle between the line joining the first point and the second point and the line joining the first point and third point may be different for each of the plurality of coupling orientations.

For each of the plurality of coupling orientations, the angle between the line joining the first point and the second point and the line joining the first point and third point may be between 0° and 180°.

The coupling plates may be configured to be fixed to each other by a fixing.

The fixing may comprise a plurality of bolts, and each coupling plate may comprise a plurality of holes through which the bolts are inserted to fix the coupling plates to each other.

Each coupling plate may comprise first holes through which bolts are inserted to mount the coupling plate to the coupling region of a respective motor-gearbox unit, and second holes through which bolts are inserted to fix the coupling plates to each other.

The mounting structure of the coupling region of each motor-gearbox unit may comprise a plurality of holes through which the bolts inserted through the first holes are inserted to mount the coupling plate to the coupling region.

Each coupling plate may comprise an inner portion in which the first holes are formed, and an outer portion surrounding the inner portion in which the second holes are formed.

The outer portion may be a flange protruding from the inner portion.

The inner portion may be substantially circular.

According to an aspect, there is provides a drivetrain apparatus for an electric vehicle, the drivetrain apparatus comprising a first motor-gearbox unit and a second motor-gearbox unit, each motor-gearbox unit comprising a gearbox, and a motor mounted to the gearbox, wherein the drivetrain apparatus further comprises a coupling apparatus configured to couple the first and second motor-gearbox units to each other in a plurality of selectively adoptable coupling orientations.

The coupling apparatus of the second aspect may provide a plurality of different predetermined orientations between the first and second motor-gearbox units.

### Brief Description of the Figures

Embodiments will now be described by way of example only, with reference to the accompanying drawings, in which:
Figure 1 illustrates a chassis of an example commercial electric vehicle.
Figures 2A and 2B respectively illustrate front and rear views of an example of a motor-gearbox unit.
Figures 3A to 3C illustrate example coupling orientations of a drivetrain apparatus comprising motor-gearbox units.
Figures 4A to 4C illustrates side views of the coupling orientations of Figures 3A to 3C.
Figure 5 illustrates an example of how two motor-gearbox units can be coupled together.
Figure 6 illustrates examples of coupling plates for use in coupling first and second motor-gearbox units together.

### Detailed Description

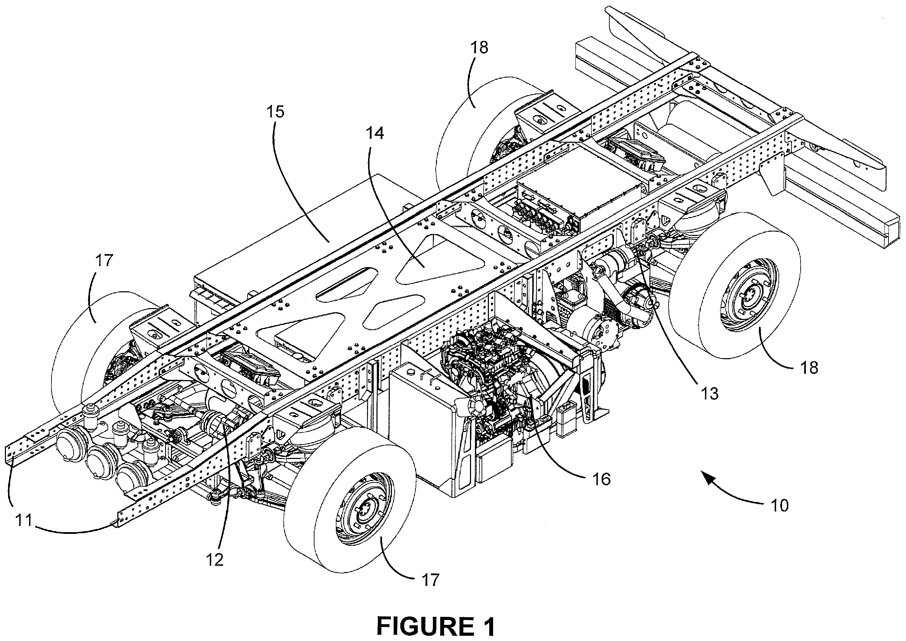

Figure 1 illustrates a chassis 10 of a commercial electric vehicle. The chassis 10 comprises a pair of chassis rails 11 to which are mounted a front drivetrain apparatus 12, a rear drivetrain apparatus 13, first and second battery modules 14, 15 and a range extender module 16.

The front drivetrain apparatus 12 is mounted towards the front of the chassis 10 and is arranged to drive the front wheels 17 of the vehicle. Similarly, the rear drivetrain apparatus 13 is mounted towards the rear of the chassis 10 and is arranged to the drive rear wheels 18. The first battery module 14, second battery module 15 and range extender module 16 are mounted between the front and rear drivetrain apparatuses 12, 13, towards the middle of the chassis 10. The first and second battery modules 14, 15 supply electrical power to electric motors of the front and rear drivetrain apparatuses 12, 13. The range extender module 16 may be configured to supply electrical energy to the battery modules 14, 15 to recharge the battery modules 14, 15. The range extender module 16 may also be configured to supply power directly to the drivetrain apparatuses 12, 13.

The front and rear drivetrain apparatuses 12, 13 may each comprise a first motor-gearbox unit and a second motor-gearbox unit (not shown). Each motor-gearbox unit comprises a gearbox for driving at least one wheel 17, 18 of the vehicle via a driveshaft. Each motor-gearbox unit also comprises an electric motor for driving the gearbox. The first and second motor-gearbox units are configured to be coupled to each other in a plurality of different coupling orientations, as will be described in more detail below.

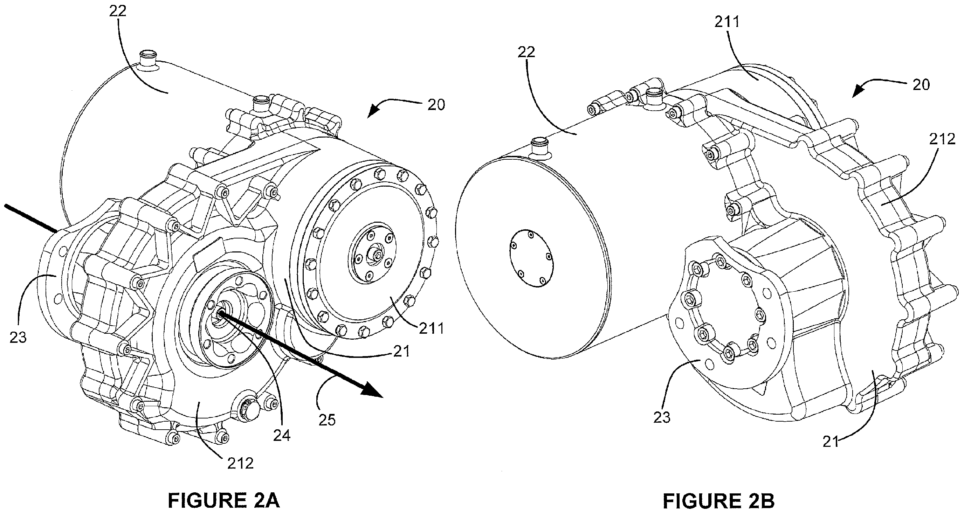

Figures 2A and 2B respectively illustrate front and rear views of a motor-gearbox unit 20 which may form part of a drivetrain apparatus such as the front or rear drivetrain apparatuses 12, 13 of Figure 1. The motor-gearbox unit 20 comprises a gearbox 21 and a motor 22 mounted to the gearbox 21. The gearbox 21 comprises a plurality of gears (not shown) which are configured to be driven by the motor 22. The motor-gearbox unit 20 comprises a coupling region to which a coupling plate 23 can be mounted. The coupling plate 23 may be configured to be coupled to another coupling plate mounted to the coupling region of another motor-gearbox unit 20.

As illustrated in Figures 2A and 2B, the coupling region of the motor-gearbox unit 20 maybe positioned on the gearbox 21 of the motor-gearbox unit 20. As such, the coupling plate 23 may be mounted to the gearbox 21 of the motor-gearbox unit 20. As illustrated in Figures 2A and 2B, the coupling region may be positioned adjacent to the motor 22 and as such, the coupling plate 23 and motor 22 of the motor-gearbox unit 20 may be mounted adjacent to each other.

The gearbox 21 of the motor-gearbox unit 20 may comprise a front side (as illustrated by the view shown in Figure 2A) and a rear side opposite to the front side (as illustrated by the view shown in Figure 2B). The front side of the gearbox 21 may have an output portion 24, the output portion 24 defining a drive axis 25. The output portion 24 may be any appropriate structure capable of mechanically coupling to a driveshaft (not shown) to cause rotational movement of the driveshaft, thereby driving the driveshaft. For example, the output portion 24 may comprise a female splined structure configured to engage with a male splined structure of a driveshaft, or vice versa. The output portion 24 may additionally or alternatively be configured to be bolted to a driveshaft to mechanically couple the output portion 24 to the driveshaft. The drive axis 25 corresponds to the axis about which a driveshaft driven by the output portion 24 rotates, and may be referred to as the drive axis of the gearbox 21.

The coupling region of each motor-gearbox unit 20 may be on the rear side of the gearbox 21. As such, the coupling plate 23 may be mounted to the rear side of the gearbox 21 of the motor-gearbox unit 20. The coupling region may comprise a mounting structure for mounting the coupling plate 23 to the coupling region. For example, as illustrated by Figure 2B, the mounting structure and the coupling plate 23 may each comprise a plurality of holes through which a plurality of bolts may be inserted to mount the coupling plate 23 to the coupling region. However, in general, the embodiments described herein are not limited to bolts and holes, and any suitable method of mounting the coupling plate 23 to the coupling region of the motor-gearbox unit 20 may be used.

The motor 22 of each motor-gearbox unit 20 may also be mounted to the rear side of the gearbox 21. Alternatively, the motor 22 may be mounted in other positions. For example, the motor 22 may be mounted to the front side of the gearbox 21 instead.

As illustrated in Figures 2A and 2B, the gearbox 21 may comprise a first compartment 211 and a second compartment 212 adjacent to the first compartment 211. The second compartment 212 may comprise the output portion 24. The first and second compartments 211, 212 may house gears which mesh together to drive the output portion 24. The coupling region as described above may be positioned on the rear of the second compartment 212. The motor 22 may be mounted to the rear of the first compartment 211 and the coupling plate 23 may be mounted to the rear of the second compartment 212. The motor 22 may be configured to drive one or more gears housed in the first compartment 211. As such, the meshing of gears between the first and second compartments 211, 212 of the gearbox 21 cause drive energy from the motor 22 to be transferred to the output portion 24.

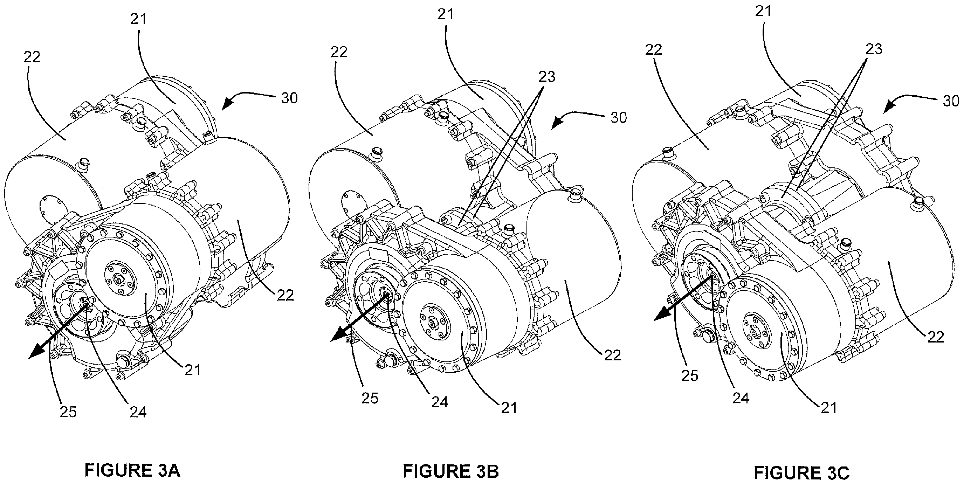

Figures 3A to 3C illustrate a drivetrain apparatus 30 comprising first and second motor-gearbox units coupled together by coupling plates 23 in a plurality of different coupling orientations. The first and second motor-gearbox units may each be a motor-gearbox unit 20 as described with reference to Figures 2A and 2B. Each of Figures 3A to 3C illustrates the drivetrain apparatus 30 in a different coupling orientation. As such, it will be apparent that the first and second motor-gearbox units are configured to provide a plurality of coupling orientations, which can be selectively adopted in dependence on vehicle requirements. As can be seen in Figures 3A to 3C, in each coupling orientation, the first and second motor-gearbox units are at a different angle to each other. For each coupling orientation, different coupling plates 23 may be used to couple the first and second motor-gearbox units to each other.

Although the first and second motor-gearbox units of Figures 3A to 3C are illustrated as being identical, it will be appreciated that this is not necessary. The first and second motor-gearbox units may not be identical in structure to each other - for example, they may differ in shape/size.

As illustrated in Figures 3A to 3C, the coupling plates 23 may be configured to couple the first and second motor-gearbox units to each other such that the drive axes 25 of the gearboxes 21 of the first and second motor-gearbox units are aligned with each other. As such, the second compartments 212 of the gearboxes 21 may be aligned with each other. Furthermore, if the coupling plates 23 are mounted on the rear side of the gearboxes 21 as illustrated in Figures 3A to 3C, the output portions 24 of the gearboxes 21 may face away from each other. In this way, the drivetrain apparatus 30 is able to drive two wheels about the same axis via two respective driveshafts. For example, in the chassis of Figure 1, the drivetrain apparatus 30 may be able to drive both of the front wheels 17 or both of the rear wheels 18. This is achieved by the output portion 24 of the first motor-gearbox unit driving a first of the wheels 17, 18 and the output portion 24 of the second motor-gearbox unit driving the other of the wheels 17, 18.

In each coupling orientation, the first and second motor-gearbox units are at a different angle to each other. Each of the plurality of coupling orientations described above can be transitioned to another coupling orientation by a rotation of one of the motor-gearbox units with respect to the other motor-gearbox unit. In other words, a first coupling orientation may differ from a second coupling orientation in that one of the motor-gearbox units is rotated relative to the other about an axis. The rotation axis may be the same axis for each of the transitions between each of the coupling orientations. The rotation to transition from one coupling orientation to another may be a rotation about the aligned drive axes 25 of the gearboxes 21 (as illustrated in Figures 3A to 3C).

In each of the plurality of coupling orientations, the parts of the drivetrain apparatus 30 may occupy different positions. As such, the shape and dimensions of the drivetrain apparatus 30 as a whole may be different for each coupling orientation. An advantage of this is that the same drivetrain apparatus 30 can be installed in many different spaces of different shapes/dimensions, and therefore is more flexible in its use.

Conventionally, the same drivetrain cannot fit in the chassis of multiple different types of vehicle, due to differing space requirements. Also, conventionally, a drivetrain which is used for the rear wheels of a vehicle may not be able to be used with the front wheels of the same vehicle (and vice versa), for similar reasons. The ability of the drivetrain apparatus 30 described herein to adopt a plurality of different coupling orientations allows it to overcome these limitations. For example, the same drivetrain apparatus 30 may be used for both the front and rear drivetrain apparatuses 12, 13 of Figure 1, even if there are different shape/dimension requirements for the relevant spaces in the chassis 10. It will be appreciated that the above described flexibility is applicable to other equivalent situations - for example, if there are different shape/dimension requirements for different types of vehicle, or if the drivetrain apparatus needs to be packaged into a particular space for transport/storage. In this way, the drivetrain apparatus 30 may be capable of efficiently using the space that is available, and may be usable with a particular space that is available.

Furthermore, it will be appreciated that the motor-gearbox units of the drivetrain apparatus 30 described herein may each also be suitable for use on their own. For example, a motor-gearbox unit of the drivetrain apparatus 30 described herein may be adapted to drive two axles of two different wheels at the same time. As such, the motor-gearbox units may each be usable in a number of different situations, and are therefore flexible in their use.

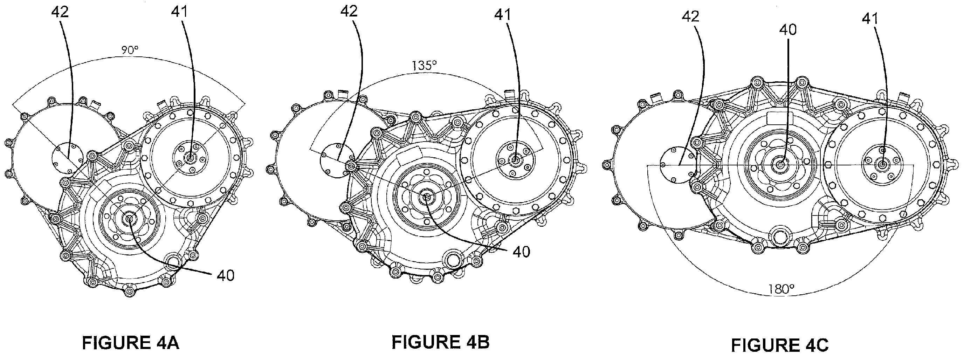

Figures 4A to 4C illustrate side views of the exemplary coupling orientations of Figures 3A to 3C. Figure 4A corresponds to the coupling orientation of Figure 3A, Figure 4B corresponds to the coupling orientation of Figure 3B, and Figure 4C corresponds to the coupling orientation of Figure 3C. In more detail, Figures 4A to 4C illustrate coupling orientations in a plane perpendicular to the aligned drive axes 25 of the gearboxes 21. In this plane, the aligned drive axes 25 define a first point 40, the centre of one of the motors defines a second point 41, and the centre of the other motor defines a third point 42. More specifically, the first point 40 may be the point of intersection between the aligned drive axes 25 and the plane, the second point may be the projection of the centre of one of the motors onto the plane, and the third point may be the projection of the centre of the other motor onto the plane.

As illustrated in Figures 4A to 4C, the angle between the line joining the first point 40 and the second point 41 and the line joining the first point 40 and third point 42 may be different for each of the plurality of coupling orientations. Although the angles illustrated in Figures 4A to 4C for the three exemplary coupling orientations are 90°, 135° and 180° respectively, it will be appreciated that the coupling orientations are not limited to these angles. For example, for each of the plurality of coupling orientations, the angle may be any angle between 90° and 180°.

In general, the angle between the line joining the first point 40 and the second point 41 and the line joining the first point 40 and third point 42 may be any suitable angle allowed by the structure of the motor-gearbox units. For example, for each of the plurality of coupling orientations, the angle between the line joining the first point and the second point and the line joining the first point and third point may, in general, be between 0° and 180°.

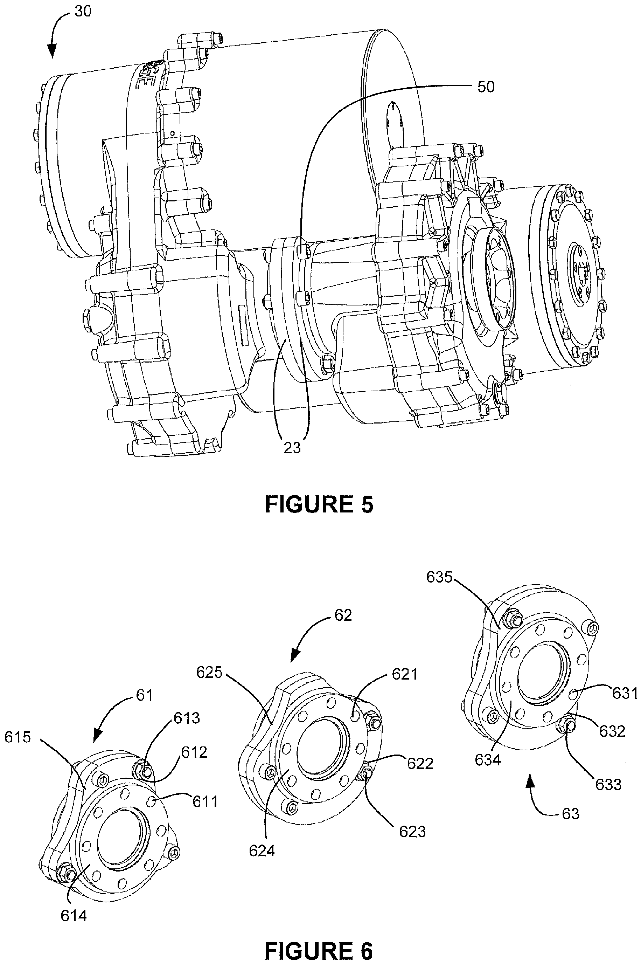

Figure 5 illustrates an example way in which the first and second motor-gearbox units may be coupled together by coupling plates 23 in a drivetrain apparatus 30. In each of the plurality of coupling orientations, the coupling plates 23 may be fixed to each other by a fixing 50. Therefore, in each of the plurality of coupling orientations, the first and second motor-gearbox units may be fixed to each other in a particular orientation relative to each other.

Each coupling orientation may involve using a different set of coupling plates to couple the first and second motor-gearbox units to each other. Therefore, transitioning between coupling orientations may involve unfixing the coupling plates 23 from each other (e.g. by removing the fixing 50), removing the coupling plates 23 from the first and second motor-gearbox units, mounting different coupling plates to the first and second motor-gearbox units, and fixing the new coupling plates to each other (e.g. using the fixing 50) to couple the first and second motor-gearbox units to each other in a new coupling orientation.

The fixing 50 described above may comprise a plurality of bolts. In this case, each coupling plate 23 may comprise a plurality of holes through which the bolts are inserted to fix the coupling plates 23 to each other. In more detail, to fix the coupling plates 23 together, the coupling plates 23 may be placed against each other such that their holes align with each other and a bolt may be inserted through each pair of aligned holes. Once inserted through, each of the bolts may be secured in place by a nut. This is illustrated in Figure 5.

Figure 6 illustrates examples of different sets of coupling plates 61, 62, 63 which may be used to couple the first and second motor-gearbox units to each other in different coupling orientations. In other words, each set of coupling plates 61, 62, 63 illustrated in Figure 6 may be used for a different coupling orientation. For example, the set of coupling plates labelled 61 may be used for the coupling orientation illustrated by Figures 3A and 4A. Similarly, the set of coupling plates labelled 62 may be used for the coupling orientation illustrated by Figures 3B and 4B, and the set of coupling plates labelled 63 may be used for the coupling orientation illustrated by Figures 3C and 4C. As such, each set of coupling plates may comprise a first coupling plate configured to be mounted to the coupling region of the first motor-gearbox unit and a second coupling plate configured to be mounted to the coupling region of the second motor-gearbox unit.

Each coupling plate of each set of coupling plates 61, 62, 63 may comprise first holes 611, 621, 631 for mounting the coupling plate to a respective motor-gearbox unit, and second holes 612, 622, 632 for fixing the coupling plate to the other coupling plate in the set. As illustrated by Figure 6, the coupling plates of each set of coupling plates 61, 62, 63 may be fixed to each other by aligning their second holes 612, 622, 632 and inserting bolts 613, 623, 633 through the aligned second holes 612, 622, 632. The bolts 613, 623, 633 may be secured in place using nuts, thereby clamping the coupling plates together. Each coupling plate of each set of coupling plates 61, 62, 63 may be mounted to a respective motor-gearbox unit by bolting the coupling plate to the respective motor-gearbox unit using its first holes 611, 621, 631 and holes in the mounting structure of the coupling region of the respective motor-gearbox unit.

As illustrated by Figure 6, each coupling plate may comprise an inner portion 614, 624, 634 and an outer portion 615, 625, 635 surrounding the inner portion 614, 624, 634. The first holes 611, 621, 631 may be formed in the inner portion 614, 624, 634. The second holes 612, 622, 632 may be formed in the outer portion 615, 625, 635. The outer portion 615, 625, 635 may be a flange protruding from the inner portion 614, 624, 634. The inner portion 614, 624, 634 may be substantially circular.

It will be appreciated that although the above structure for the coupling plates is described with reference to the coupling plates shown in Figure 6, this structure is generally applicable to any coupling plate defined above.

The drivetrain apparatus 30 has hereinbefore been described with reference to coupling plates. However, the coupling of the motor-gearbox units 20 is not limited as such and it will be appreciated any type of coupling apparatus may be used. Coupling plates 23 as described above represents only one example of a type of coupling apparatus that may be used. In general, the coupling region of each motor-gearbox unit 20 may be configured to receive each of a plurality of different coupling apparatuses configured to couple the motor-gearbox units to each other, wherein each coupling apparatus provides a different coupled orientation between the motor-gearbox units 20. Each coupling apparatus may provide a particular predetermined orientation between the motor-gearbox units 20. For example, the predetermined orientations provided by the coupling apparatuses may be the orientations illustrated by Figures 3A-3C and 4A-4C. The mounting structure as described above with reference to Figure 2A and 2B may in general be any mounting structure that can be used for mounting each of the plurality of coupling apparatuses to the coupling region. As such, the mounting structure may be universal to the plurality of coupling apparatuses.

Furthermore, the coupling regions of the drivetrain apparatus 30 have hereinbefore been described as being configured to receive each of a plurality of different coupling apparatuses. However, it will be appreciated that the coupling of the motor-gearbox units 20 is not limited specifically to the use of a different coupling apparatus for each coupling orientation. It is also possible to use the same coupling apparatus for all of the coupling orientations. For example, the same coupling apparatus may provide all of the coupling orientations described with reference to Figures 3A-3C and 4A-4C. Such a coupling apparatus is configured to couple the motor-gearbox units to each other in a plurality of selectively adoptable coupling orientations, and may form part of the drivetrain apparatus. In other words, the same coupling apparatus may be used to provide a plurality of different predetermined orientations between the first and second motor-gearbox units. For example, this coupling apparatus may comprise a pair of coupling plates each mounted to a respective motor-gearbox unit, wherein the coupling plates can be fixed to each other in a plurality of different coupling orientations. It will be appreciated that such a coupling apparatus may be positioned relative to the motor-gearbox units in the same way as the plurality of different coupling apparatuses described above. For example, the coupling apparatus may be mounted adjacent to the motor of each motor-gearbox unit and to the rear of the gearbox of each of the motor-gearbox units.

The embodiments of the invention shown in the drawings and described above are exemplary embodiments only and are not intended to limit the scope of the invention, which is defined by the claims hereafter. Any combination of non-mutually exclusive features described herein are within the scope of the present disclosure.

## Claims

1. A drivetrain apparatus (30) for an electric vehicle, the drivetrain apparatus (30) comprising a first motor-gearbox unit (20); a second motor-gearbox unit (20); and a coupling apparatus (23), wherein each motor-gearbox unit (20) comprises:
a gearbox (21);
a motor (22) mounted to the gearbox (21); and
a coupling region configured to receive the coupling apparatus; and wherein:
the coupling apparatus (23) is configured to couple the first motor-gearbox unit (20) to the second motor-gearbox unit (20);
the coupling apparatus (23) provides a coupled orientation between the first and second motor-gearbox units (20); and
the coupled orientation can be transitioned to another coupled orientation by a rotation of one of the motor-gearbox units (20) with respect to the other motor-gearbox unit (20).

2. The drivetrain apparatus (30) of claim 1, wherein the coupling region of each motor-gearbox unit (20) comprises a mounting structure for mounting the coupling apparatus (23) to the coupling region.

3. The drivetrain apparatus (30) of claim 1 or claim 2, wherein the coupling apparatus (23) comprises a first coupling plate (23) and a second coupling plate (23).

4. The drivetrain apparatus (30) of claim 3, wherein the first coupling plate (23) is configured to be mounted to the coupling region of the first motor-gearbox unit (20) and the second coupling plate (23) is configured to be mounted to the coupling region of the second motor-gearbox unit (20).

5. The drivetrain apparatus (30) of any preceding claim, wherein the gearbox (21) of each motor-gearbox unit (20) comprises:
a front side having an output portion (24), the output portion (24) defining a drive axis (25); and
a rear side opposite to the front side; and optionally wherein:
the coupling region of each motor-gearbox unit (20) is on the rear side of the gearbox (21) of the motor-gearbox unit (20); and/or
the motor (22) of each motor-gearbox unit (20) is mounted to the rear side of the gearbox (21) of the motor-gearbox unit (20).

6. The drivetrain apparatus (30) of claim 5, wherein the motor-gearbox units (20) are configured to be coupled to each other such that the drive axes (25) of the gearboxes (21) of the motor-gearbox units (20) are aligned with each other.

7. The drivetrain apparatus (30) of any preceding claim, wherein the rotation to transition from one coupled orientation to another is a rotation about the aligned drive axes (25) of the gearboxes (21).

8. The drivetrain apparatus (30) of claim 6 or claim 7, wherein in a plane perpendicular to the aligned drive axes (25) of the gearboxes (21), the aligned drive axes (25) define a first point (40), the centre of one of the motors (22) defines a second point (41), and the centre of the other motor (22) defines a third point (42), and wherein the angle between the line joining the first point (40) and the second point (41) and the line joining the first point and third point (42) is different for each of the coupled orientations; optionally wherein: for each of the coupled orientations, the angle between the line joining the first point (40) and the second point (41) and the line joining the first point (40) and third point (42) is between 0° and 180°.

9. The drivetrain apparatus (30) of claim 3, or any of claims 4 to 8 when dependent on claim 3, wherein the coupling plates (23) are configured to be fixed to each other by a fixing (50).

10. The drivetrain apparatus (30) of claim 9, wherein the fixing (50) comprises a plurality of bolts (613, 623, 633), and each coupling plate (23) comprises a plurality of holes (612, 622, 632) through which the bolts (613, 623, 633) are inserted to fix the coupling plates (23) to each other.

11. The drivetrain apparatus (30) of claim 10, wherein each coupling plate (23) comprises:
first holes (611, 621, 631) through which bolts are inserted to mount the coupling plate (23) to the coupling region of a respective motor-gearbox unit (20); and second holes (612, 622, 632) through which bolts (613, 623, 633) are inserted to fix the coupling plates (23) to each other.

12. The drivetrain apparatus (30) of claim 11 when dependent on claim 2, wherein the mounting structure of the coupling region of each motor-gearbox unit (20) comprises a plurality of holes through which the bolts inserted through the first holes (611, 621, 631) are inserted to mount the coupling plate (23) to the coupling region.

13. The drivetrain apparatus (30) of claim 11 or claim 12, wherein each coupling plate (23) comprises:
an inner portion (614, 624, 634) in which the first holes (611, 621, 631) are formed; and
an outer portion (615, 625, 635) surrounding the inner portion (614, 624, 634), in which the second holes are formed; and optionally wherein:
the outer portion (615, 625, 635) is a flange protruding from the inner portion (614, 624, 634); and/or
the inner portion (614, 624, 634) is substantially circular.

14. A drivetrain apparatus (30) for an electric vehicle, the drivetrain apparatus (30) comprising a first motor-gearbox unit (20) and a second motor-gearbox unit (20), each motor-gearbox unit (20) comprising:
a gearbox (21); and
a motor (22) mounted to the gearbox (21),
wherein the drivetrain apparatus (30) further comprises a coupling apparatus (23) configured to couple the first and second motor-gearbox units (20) to each other in a plurality of selectively adoptable coupling orientations.

15. The drivetrain apparatus (30) of claim 14, wherein the coupling apparatus (23) provides a plurality of different predetermined orientations between the first and second motor-gearbox units (20).

## Patentansprüche

1. Antriebsstrangvorrichtung (30) für ein Elektrofahrzeug, wobei die Antriebsstrangvorrichtung (30) eine erste Motorgetriebeeinheit (20), eine zweite Motorgetriebeeinheit (20) und eine Kupplungsvorrichtung (23) umfasst, wobei jede Motorgetriebeeinheit (20) Folgendes umfasst:
ein Getriebe (21);
einen am Getriebe (21) montierten Motor (22) und
einen Kupplungsbereich, der dazu ausgelegt ist, die Kupplungsvorrichtung aufzunehmen; und wobei:
die Kupplungsvorrichtung (23) dazu ausgelegt ist, die erste Motorgetriebeeinheit (20) mit der zweiten Motorgetriebeeinheit (20) zu koppeln;
die Kupplungsvorrichtung (23) eine Kupplungsausrichtung zwischen der ersten und zweiten Motorgetriebeeinheit (20) vorsieht; und
die Kupplungsausrichtung durch Drehung einer der Motorgetriebeeinheiten (20) in Bezug zur anderen Motorgetriebeeinheit (20) in eine andere Kupplungsausrichtung gebracht werden kann.

2. Antriebsstrangvorrichtung (30) nach Anspruch 1, wobei der Kupplungsbereich jeder Motorgetriebeeinheit (20) eine Montagestruktur zum Montieren der Kupplungsvorrichtung (23) am Kupplungsbereich umfasst.

3. Antriebsstrangvorrichtung (30) nach Anspruch 1 oder Anspruch 2, wobei die Kupplungsvorrichtung (23) eine erste Kupplungsplatte (23) und eine zweite Kupplungsplatte (23) umfasst.

4. Antriebsstrangvorrichtung (30) nach Anspruch 3, wobei die erste Kupplungsplatte (23) dazu ausgelegt ist, am Kupplungsbereich der ersten Motorgetriebeeinheit (20) montiert zu sein, und die zweite Kupplungsplatte (23) dazu ausgelegt ist, am Kupplungsbereich der zweiten Motorgetriebeeinheit (20) montiert zu sein.

5. Antriebsstrangvorrichtung (30) nach einem der vorstehenden Ansprüche, wobei das Getriebe (21) jeder Motorgetriebeeinheit (20) Folgendes umfasst:
eine Vorderseite, die einen Ausgangsabschnitt (24) aufweist, wobei der Ausgangsabschnitt (24) eine Antriebsachse (25) definiert; und
eine Rückseite, die der Vorderseite entgegengesetzt ist;
und optional wobei:
sich der Kupplungsbereich jeder Motorgetriebeeinheit (20) auf der Rückseite des Getriebes (21) der Motorgetriebeeinheit (20) befindet; und/oder der Motor (22) jeder Motorgetriebeeinheit (20) an der Rückseite des Getriebes (21) der Motorgetriebeeinheit (20) montiert ist.

6. Antriebsstrangvorrichtung (30) nach Anspruch 5, wobei die Motorgetriebeeinheiten (20) dazu ausgelegt sind, derart aneinander gekoppelt zu werden, dass die Antriebsachsen (25) der Getriebe (21) der Motorgetriebeeinheiten (20) aneinander ausgerichtet sind.

7. Antriebsstrangvorrichtung (30) nach einem der vorstehenden Ansprüche, wobei die Drehung zum Übergang von einer Kupplungsausrichtung zur anderen eine Drehung um die ausgerichteten Antriebsachsen (25) der Getriebe (21) ist.

8. Antriebsstrangvorrichtung (30) nach Anspruch 6 oder 7, wobei die ausgerichteten Antriebsachsen (25) in einer Ebene senkrecht zu den ausgerichteten Antriebsachsen (25) der Getriebe (21) einen ersten Punkt (40) definieren, wobei die Mitte eines der Motoren (22) einen zweiten Punkt (41) definiert und wobei die Mitte des anderen Motors (22) einen dritten Punkt (42) definiert und wobei der Winkel zwischen der Linie, die den ersten Punkt (40) mit dem zweiten Punkt (41) verbindet, und der Linie, die den ersten Punkt mit dem dritten Punkt (42) verbindet, für jede der Kupplungsausrichtungen anders ist; optional wobei: der Winkel zwischen der Linie, die den ersten Punkt (40) mit dem zweiten Punkt (41) verbindet, und der Linie, die den ersten Punkt (40) mit dem dritten Punkt (42) verbindet, für jede der Kupplungsausrichtungen zwischen 0° und 180° beträgt.

9. Antriebsstrangvorrichtung (30) nach Anspruch 3 oder einem der Ansprüche 4 bis 8, wenn abhängig von Anspruch 3, wobei die Kupplungsplatten (23) dazu ausgelegt sind, über eine Fixierungseinrichtung (50) aneinander fixiert zu sein.

10. Antriebsstrangvorrichtung (30) nach Anspruch 9, wobei die Fixierungseinrichtung (50) mehrere Bolzen (613, 623, 633) umfasst und jede Kupplungsplatte (23) mehrere Bohrungen (612, 622, 632) umfasst, durch die die Bolzen (613, 623, 633) eingesetzt werden, um die Kupplungsplatten (23) aneinander zu fixieren.

11. Antriebsstrangvorrichtung (30) nach Anspruch 10, wobei jede Kupplungsplatte (23) Folgendes umfasst: erste Bohrungen (611, 621, 631), durch die Bolzen eingesetzt werden, um die Kupplungsplatte (23) am Kupplungsbereich einer jeweiligen Motorgetriebeeinheit (20) zu montieren; und zweite Bohrungen (612, 622, 632), durch die die Bolzen (613, 623, 633) eingesetzt werden, um die Kupplungsplatten (23) aneinander zu fixieren.

12. Antriebsstrangvorrichtung (30) nach Anspruch 11, wenn abhängig von Anspruch 2, wobei die Montagestruktur des Kupplungsbereichs jeder Motorgetriebeeinheit (20) mehrere Bohrungen umfasst, durch die die durch die ersten Bohrungen (611, 621, 631) eingesetzten Bolzen eingesetzt werden, um die Kupplungsplatte (23) am Kupplungsbereich zu montieren.

13. Antriebsstrangvorrichtung (30) nach Anspruch 11 oder Anspruch 12, wobei jede Kupplungsplatte (23) Folgendes umfasst:
einen inneren Abschnitt (614, 624, 634), in dem die ersten Bohrungen (611, 621, 631) ausgebildet sind; und
einen den inneren Abschnitt (614, 624, 634) umgebenden äußeren Abschnitt (615, 625, 635), in dem die zweiten Bohrungen ausgebildet sind; und optional wobei:
der äußere Abschnitt (615, 625, 635) ein Flansch ist, der vom inneren Abschnitt (614, 624, 634) vorsteht; und/oder der innere Abschnitt (614, 624, 634) im Wesentlichen kreisförmig ist.

14. Antriebsstrangvorrichtung (30) für ein Elektrofahrzeug, wobei die Antriebsstrangvorrichtung (30) eine erste Motorgetriebeeinheit (20) und eine zweite Motorgetriebeeinheit (20) umfasst, wobei jede Motorgetriebeeinheit (20) Folgendes umfasst:
ein Getriebe (21) und
einen am Getriebe (21) montierten Motor (22),
wobei die Antriebsstrangvorrichtung (30) ferner eine Kupplungsvorrichtung (23) umfasst, die dazu ausgelegt ist, die erste und zweite Motorgetriebeeinheit (20) in mehreren selektiv auswählbaren Kupplungsausrichtungen aneinander zu koppeln.

15. Antriebsstrangvorrichtung (30) nach Anspruch 14, wobei die Kupplungsvorrichtung (23) mehrere verschiedene festgelegte Ausrichtungen zwischen der ersten und zweiten Motorgetriebeeinheit (20) vorsieht.

## Revendications

1. Appareil formant chaîne cinématique (30) pour un véhicule électrique, l'appareil formant chaîne cinématique (30) comprenant une première unité moteur-boîte de vitesses (20) ; une deuxième unité moteur-boîte de vitesses (20) ; et un appareil d'accouplement (23), chaque unité moteur-boîte de vitesses (20) comprenant :
une boîte de vitesses (21) ;
un moteur (22) monté sur la boîte de vitesses (21) ; et
une région d'accouplement configurée pour recevoir l'appareil d'accouplement ; et
l'appareil d'accouplement (23) étant configuré pour accoupler la première unité moteur-boîte de vitesses (20) à la deuxième unité moteur-boîte de vitesses (20) ;
l'appareil d'accouplement (23) procurant une orientation accouplée entre les première et deuxième unités moteur-boîte de vitesses (20) ; et
l'orientation accouplée étant susceptible de passer à une autre orientation accouplée au moyen d'une rotation de l'une des unités moteur-boîte de vitesses (20) par rapport à l'autre unité moteur-boîte de vitesses (20).

2. Appareil formant chaîne cinématique (30) selon la revendication 1, dans lequel la région d'accouplement de chaque unité moteur-boîte de vitesses (20) comprend une structure de montage permettant le montage de l'appareil d'accouplement (23) sur la région d'accouplement.

3. Appareil formant chaîne cinématique (30) selon la revendication 1 ou la revendication 2, dans lequel l'appareil d'accouplement (23) comprend une première plaque d'accouplement (23) et une deuxième plaque d'accouplement (23).

4. Appareil formant chaîne cinématique (30) selon la revendication 3, dans lequel la première plaque d'accouplement (23) est configurée pour être montée sur la région d'accouplement de la première unité moteur-boîte de vitesses (20) et la deuxième plaque d'accouplement (23) est configurée pour être montée sur la région d'accouplement de la deuxième unité moteur-boîte de vitesses (20).

5. Appareil formant chaîne cinématique (30) selon l'une quelconque des revendications précédentes, dans lequel la boîte de vitesses (21) de chaque unité moteur-boîte de vitesses (20) comprend :
un côté avant pourvu d'une partie de sortie (24), la partie de sortie (24) définissant un axe d'entraînement (25) ; et
un côté arrière opposé au côté avant ; et, éventuellement
la région d'accouplement de chaque unité moteur-boîte de vitesses (20) se situant du côté arrière de la boîte de vitesses (21) de l'unité moteur-boîte de vitesses (20) ; et/ou
le moteur (22) de chaque unité moteur-boîte de vitesses (20) étant monté du côté arrière de la boîte de vitesses (21) de l'unité moteur-boîte de vitesses (20).

6. Appareil formant chaîne cinématique (30) selon la revendication 5, dans lequel les unités moteur-boîte de vitesses (20) sont configurées pour être accouplées entre elles de sorte que les axes d'entraînement (25) des boîtes de vitesses (21) des unités moteur-boîte de vitesses (20) soient alignés entre eux.

7. Appareil formant chaîne cinématique (30) selon l'une quelconque des revendications précédentes, dans lequel la rotation pour le passage d'une orientation accouplée à une autre est une rotation autour des axes d'entraînement (25) alignés des boîtes de vitesses (21).

8. Appareil formant chaîne cinématique (30) selon la revendication 6 ou la revendication 7, dans lequel, dans un plan perpendiculaire aux axes d'entraînement (25) alignés des boîtes de vitesses (21), les axes d'entraînement (25) alignés définissent un premier point (40), le centre de l'un des moteurs (22) définit un deuxième point (41) et le centre de l'autre moteur (22) définit un troisième point (42), et dans lequel l'angle entre la ligne joignant le premier point (40) et le deuxième point (41) et la ligne joignant le premier point et le troisième point (42) est différent pour chacune des orientations accouplées ; éventuellement, pour chacune des orientations accouplées, l'angle entre la ligne joignant le premier point (40) et le deuxième point (41) et la ligne joignant le premier point (40) et le troisième point (42) étant compris entre 0° et 180°.

9. Appareil formant chaîne cinématique (30) selon la revendication 3, ou l'une quelconque des revendications 4 à 8 lorsqu'elle dépend de la revendication 3, dans lequel les plaques d'accouplement (23) sont configurées pour être fixées entre elles par une fixation (50).

10. Appareil formant chaîne cinématique (30) selon la revendication 9, dans lequel la fixation (50) comprend une pluralité de boulons (613, 623, 633) et chaque plaque d'accouplement (23) comprend une pluralité de trous (612, 622, 632) au travers desquels sont introduits les boulons (613, 623, 633) pour fixer les plaques d'accouplement (23) entre elles.

11. Appareil formant chaîne cinématique (30) selon la revendication 10, dans lequel chaque plaque d'accouplement (23) comprend : des premiers trous (611, 621, 631) au travers desquels sont introduits des boulons pour monter la plaque d'accouplement (23) sur la région d'accouplement d'une unité moteur-boîte de vitesses (20) respective ; et des deuxièmes trous (612, 622, 632) au travers desquels sont introduits des boulons (613, 623, 633) pour fixer les plaques d'accouplements (23) entre elles.

12. Appareil formant chaîne cinématique (30) selon la revendication 11 lorsqu'elle dépend de la revendication 2, dans lequel la structure de montage de la région d'accouplement de chaque unité moteur-boîte de vitesses (20) comprend une pluralité de trous au travers desquels sont introduits les boulons introduits au travers des premiers trous (611, 621, 631) pour monter la plaque d'accouplement (23) sur la région d'accouplement.

13. Appareil formant chaîne cinématique (30) selon la revendication 11 ou la revendication 12, dans lequel chaque plaque d'accouplement (23) comprend :
une partie intérieure (614, 624, 634) dans laquelle sont pratiqués les premiers trous (611, 621, 631) ; et
une partie extérieure (615, 625, 635) entourant la partie intérieure (614, 624, 634), dans laquelle sont pratiqués les deuxièmes trous ; et éventuellement
la partie extérieure (615, 625, 635) étant une bride en saillie depuis la partie intérieure (614, 624, 634) ; et/ou
la partie intérieure (614, 624, 634) étant sensiblement circulaire.

14. Appareil formant chaîne cinématique (30) pour un véhicule électrique, l'appareil formant chaîne cinématique (30) comprenant une première unité moteur-boîte de vitesses (20) et une deuxième unité moteur-boîte de vitesses (20), chaque unité moteur-boîte de vitesses (20) comprenant :
une boîte de vitesses (21) ; et
un moteur (22) monté sur la boîte de vitesses (21),
l'appareil formant chaîne cinématique (30) comprenant en outre un appareil d'accouplement (23) configuré pour accoupler les première et deuxième unités moteur-boîte de vitesses (20) entre elles dans une pluralité d'orientations d'accouplement adoptables sélectivement.

15. Appareil formant chaîne cinématique (30) selon la revendication 14, dans lequel l'appareil d'accouplement (23) procure une pluralité d'orientations prédéterminées différentes entre les première et deuxième unités moteur-boîte de vitesses (20).
